# EUROPÄISCHE PATENTSCHRIFT

(11) **EP 0 911 567 B1**
(45) Veröffentlichungstag und Bekanntmachung des Hinweises auf die Patenterteilung: **05.03.2003**
(21) Anmeldenummer: 98119775.9
(22) Anmeldetag: 23.10.1998
(51) Int. Cl.: F16L 55/033, F16L 55/05

(54) **Pulsationsdämpfer**
Pulsation damper
Amortisseur de pulsations

(30) Priorität: 24.10.1997 DE 19747158
(43) Veröffentlichungstag der Anmeldung: 28.04.1999
(73) Patentinhaber: WOCO Franz-Josef Wolf & Co. GmbH, 63628 Bad Soden-Salmünster (DE)
(72) Erfinder: Wolf, Franz Josef, 63629 Bad Soden-Salmünster (DE); Wolf, Anton, Dr., 63571 Gelnhausen (DE); Hohmann, Josef, 36396 Steinau a.d.Str. (DE); Gärtner, Udo, 36396 Steinau-Bellings (DE)
(74) Vertreter: Weber-Bruls, Dorothée, Dr.

(56) Entgegenhaltungen:
- DE-A- 3 735 081
- DE-A- 4 128 386
- GB-A- 2 234 015
- US-A- 4 759 387

## Beschreibung

Die Erfindung betrifft einen Dämpfer, und zwar einen Dämpfer zum Bedämpfen von Druckpulsationen in druckbeaufschlagten Flüssigkeiten in Druckleitungen. Speziell betrifft die Erfindung einen Pulsationsdämpfer zum Dämpfen von Druckpulsationen in leitungsgeführten Flüssigkeiten mit Frequenzen im hörbaren Bereich.

Solche Druckpulsationen treten regelmäßig in den mit hohen Druckwechseln beaufschlagten Hydraulikleitungen der verschiedensten Arbeitssysteme, Steuersysteme und Servosysteme auf. Insbesondere bei den unter hohen Drücken arbeitenden Servolenksystemen vieler Kraftfahrzeuge liegen solche Druckpulsationen in dem hydraulischen Arbeitsfluid der Druckleitungen im hörbaren Bereich, so daß die Pulsationen als Körperschwingungen von den Druckrohrleitungen abgestrahlt werden und im Fahrzeug als Pfeifgeräusch störend hörbar sind. Dabei werden solche Druckpulsationen unvermeidbar durch die Druckerzeugungsaggregate, zumeist eine Zahnradpumpe, dem unter Druck stehenden hydraulischen Fluid aufgeprägt.

Zum Dämpfen der als Körperschall abgestrahlten Druckpulsation in Hydraulikleitungen dieser Art ist bekannt, lange Hydraulikleitungsabschnitte aus einem Gummi-Gewebe-Material in das eigentliche Druckleitungssystem einzufügen, um so zumindest die Schallabstrahlung einzudämmen.

Alternativ sind aus der Praxis auch Versuche bekannt, Pulsationen in hydraulischen Druckleitungen durch parallelgeschaltete Druckgasblasen, speziell Stickstoffblasen, zu bedämpfen.

Beide bekannten Versuche zur unmittelbaren Bedämpfung von Pulsationen in Hydraulikleitungen führen zu unbefriedigenden Ergebnissen im Hinblick auf die Dämpfung. Zudem wirken sie sich systematisch nachteilig auf die Strömungskenndaten und Übertragungskenndaten der Hydrauliksysteme aus, beanspruchen einsparbaren Bauraum und sind bei ungenügender Standzeit auch kritisch hinsichtlich ihrer Dauerfunktionszuverlässigkeit.

Die Druckschrift GB 2 234 015 A offenbart einen Pulsationsdämpfer mit einem Zentralrohr mit senkrecht zur Zentralachse verlaufenden Bohrungen und einer das Zentralrohr radial umgebenden elastischen Membran, welche das Druckfluid von dem in einem radial umgebenden Hohlraum vorhandenen Gas abgrenzt.

Der Erfindung liegt die Aufgabe zugrunde, einen Druckpulsationsdämpfer für Druckfluide in Hydraulikleitungen zu schaffen, der auch als Breitbanddämpfer im Bereich von 50 Hz bis 20 kHz einsetzbar ist, kompakt dimensionierbar ist und aufgrund einer robusten Konfigurierbarkeit durch Dauerfunktionszuverlässigkeit und lange Betriebsstandzeiten ausgezeichnet ist.

Zur Lösung dieser Aufgabe schafft die Erfindung einen Pulsationsdämpfer zum Dämpfen von Druckpulsationen in leitungsgeführten druckbeaufschlagten Flüssigkeiten, insbesondere zum Dämpfen von Pulsationen mit Frequenzen im hörbaren Frequenzbereich, der die im Patentanspruch 1 genannten Merkmale aufweist.

Die Erfindung betrifft also einen Pulsationsdämpfer zum Dämpfen von Druckpulsationen, die vor allem bei Wechsellast in druckbeaufschlagten hydraulischen Leitungssystemen auftreten. Gemäß der Erfindung ist ein solcher Pulsationsdämpfer als insgesamt starrer Rohrabschnitt ausgebildet, der unmittelbar in die Hydraulikleitung eingeschaltet werden kann. Weiterhin ist es zweckmäßig, den so aufgebauten Dämpfer rotationssymmetrisch um eine Zentralachse herum zu gestalten. Um diese Zentralachse herum, die vorzugsweise jedoch keinesfalls notwendigerweise, linear verlaufend konfiguriert ist, ist ein axial durchgehender Rohrabschnitt ausgebildet, dessen Innendurchmesser zumindest grössenordnungsmässig dem lichten Durchmesser der angeschlossenen Hydraulikleitung entspricht.

In diesen Zentralkanal hinein öffnen sich durchgehende kanalartige Bohrungen, die den Zentralkanal mit dem zu bedämpfenden Fluid hydraulisch mit radial außenliegenden, diesen umgebenden Kammern verbindet. In jede dieser Kammern kann sich jeweils eine oder können sich mehrere der vorgesehenen Bohrungen öffnen. Abgesehen von der hydraulischen Verbindung über die kanalartigen Bohrungen und den Zentralkanal des Pulsationsdämpfers sind die peripher außen um den Zentralkanal herum angeordneten Kammern sowohl hydraulisch als auch pneumatisch hermetisch gegeneinander abgegrenzt.

Zudem ist jede einzelne der um den Zentralkanal herum angeordneten Kammern in sich noch einmal durch eine elastische druckfeste Membran in zwei ebenfalls fluidisch hermetisch voneinander abgegrenzte Teilkammern unterteilt, von denen die eine radial innen liegt und über die kanalartigen Bohrungen hydraulisch mit dem zu dämpfenden Fluid verbunden ist, während die andere Teilkammer radial außenliegend in der Weise angeordnet und ausgebildet ist, daß die Membran eine beiden Teilkammern gemeinsame Trennwand bildet. Die außenliegende Teilkammer ist mit einem pneumatischen Fluid, vorzugsweise mit Luft oder Stickstoff, befüllt. Zudem kann die außenliegende Kammer bei Herstellung des Pulsationsdämpfers unter Druck gefüllt und hermetisch verschlossen werden, kann aber auch als offenes, aktives System derart ausgebildet sein, daß das in der außenliegenden Teilkammer verfügbare Volumen einer aktiv gezielten Drucksteuerung unterliegt.

Jede dieser zweiteiligen Kammern wirkt in Verbindung mit einer oder mehreren der kanalartigen Bohrung als Helmholtz-Resonator, der die Druckpulsation der in dem im Zentralrohr geführten Flüssigkeit aktiv wirksam dämpft. Dabei definiert die in der kanalartigen Bohrung und in der hydraulischen Teilkammer stehende Flüssigkeit die Masse des schwingenden Helmholtz-Systems, während die zugehörige Feder ihre Federelastizität kombiniert aus dem in der radial äußeren Teilkammer eingeschlossenen Gasvolumen und der Elastizität der Membranwand bezieht. Der hydraulische Helmholtz-Resonator wird also durch eine kombinierte Gummi-Druckgas-Feder beaufschlagt.

Jeder einzelne der so in dem Pulsationsdämpfer gebildeten Helmholtz-Resonatoren kann durch ein Abstimmen der Kenndaten des Luftkammervolumens, der Membran sowie der Konfiguration und Dimensionierung der kanalartigen Bohrung und deren Wandeigenschaften auf eine bestimmte Mittenfrequenz, genauer ein definiertes Frequenzband, eingestellt werden. Das so abgestimmte Frequenzband wird dann aus der Druckpulsation der im Zentralrohr geführten hydraulischen Druckflüssigkeit akustisch herausgelöscht.

Durch das axiale Hintereinanderschalten jeweils voneinander unterschiedlich abgestimmter, jedoch bereichsweise aufeinander abgestimmten Resonatoren im Pulsationsdämpfer gemäß der Erfindung kann ein Dämpfer hergestellt werden, der bei bereits kurzer und kleiner Bauweise ein abgeschlossenes breites Frequenzband dämpfen kann. Eine solche Frequenzbandbreite kann dabei beispielsweise für eine Anwendung im Bereich der Servohydraulik für die Lenkung von Kraftfahrzeugen praktisch den gesamten hörbaren Frequenzbereich erfassen.

Bei rotationssymmetrischer Bauweise sind die "Federkammern" der Resonatoren des Pulsationsdämpfers vorzugsweise als Ringkammern ausgebildet und die Elastomermembran als Schlauchabschnitt, der sich insbesondere über die gesamte axiale Länge des Dämpfers erstreckt. Bei dieser Ausgestaltung der Membran läßt sich insbesondere in recht einfacher Weise deren Vorspannung einstellen, wodurch sich in Folge in ebenfalls recht einfacher Weise die Resonanzkenndaten jedes einzelnen Helmholtz-Resonators beeinflussen, abstimmen und festlegen lassen.

Statt geschlossen durchgehender ringförmiger, den Zentralkanal umgebender Resonatorkammern können jedoch auch Folgen unterschiedlich dimensionierter Kammern um das Zentralrohr herum ausgebildet sein, von denen jede beispielsweise die Form eines Zylinderringsegmentes aufweist. Bei dieser Bauweise läßt sich bei axial kürzester Raumbeanspruchung ein besonders breites dämpfendes Frequenzband für den Pulsationsdämpfer herstellen.

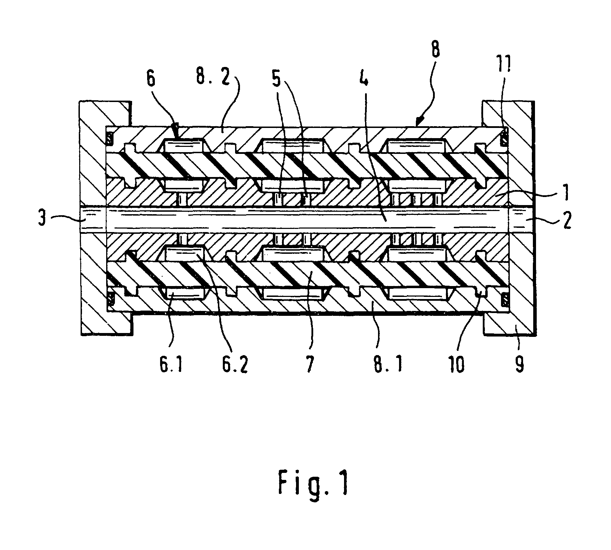

Die Erfindung ist im folgenden anhand eines Ausführungsbeispiels in Verbindung mit der Zeichnung näher erläutert. Dabei zeigt die einzige Figur, nämlich die
- Fig. 1: einen Pulsationsdämpfer mit den Merkmalen der Erfindung zum Dämpfen von Druckpulsationen im akustischen Bereich zum Bedämpfen der Servoleitungen für das Lenksystem von Kraftfahrzeugen.

Der in der Fig. 1 gezeigte Pulsationsdämpfer besteht im wesentlichen aus einem Zentralrohr 1, einem Außenrohr 8, das aus zwei Schalen (8.1, 8.2) mit einer axialen Trennebene ausgebildet ist und das Zentralrohr 1 umgibt, aus einer Elastomermanschette 7, die zwischen dem Zentralrohr 1 und dem Außenrohr 8 durch Aufspannen auf das Zentralrohr 1 unter radialer Vorspannung zwischen das Außenrohr 8 und das Zentralrohr 1 eingefügt ist, sowie aus stirnseitigen Endkappen 9, die auf die Enden des Außenrohres 8 aufgeschraubt oder aufgeschweißt oder anderweitig befestigt aufgebracht sind und den Pulsationsdämpfer axial und radial druckfest und fluiddicht mechanisch stabil zusammenhalten.

Das Zentralrohr 1, das Außenrohr 8 und die Endkappen 9 bestehen zweckmäßigerweise aus Stahl, Aluminium oder aus einem geeigneten Kunststoff, können prinzipiell jedoch auch aus jedem anderen geeigneten metallischen oder nicht metallischen formstabilen, druckfesten und fluiddichten Werkstoff hergestellt sein. Die schlauchförmig ausgebildete Elastomermembran 7 kann prinzipiell aus jedem druckfesten und fluiddichten, zumeist auch temperaturfesten Elastomer hergestellt sein, so beispielsweise aus EPDM.

Das Innere des Pulsationsdämpfers ist über Dichtringe 11 nach außen abgedichtet, die die Stirnseite des Außenrohres 8 gegen die radiale Innenfläche der Endkappen 9 abdichten.

Der Innenraum 4 des Zentralrohres 1 ist über Anschlüsse 2,3 in die zu bedämpfende Hydraulikleitung (in der Figur nicht dargestellt) eingefügt, und zwar möglichst dicht am Ausgangsstutzen des hydraulischen Druckgenerators, beispielsweise einer Zahnradpumpe. Alternativ kann der in Fig. 1 dargestellte Pulsationsdämpfer auch unmittelbar mit dem Druckstutzen des Druckgenerators integriert sein.

Die Resonatorkammern 6 sind als koaxial um den Innenraum 4 des Zentralrohres 1 in sich geschlossen umlaufende Ringkammern ausgebildet, die jeweils durch die Elastomermembran 7 in eine radial außenliegende Teilkammer 6.1 und in eine radial innenliegende Teilkammer 6.2 unterteilt sind.

Jede der radial außenliegenden Teilkammern 6.1 ist mit einem pneumatischen Fluid, vorzugsweise Luft oder Stickstoff, gefüllt. Das Gas steht dabei vorzugsweise unter einem Druck, der größer als der Normaldruck der Umgebung ist.

In dem hier in Fig. 1 gezeigten Ausführungsbeispiel sind die das pneumatische Fluid enthaltenden außenliegenden Teilkammern 6.1 geschlossen dargestellt, so daß das Füllgas unter konstantem Arbeitsdruck steht. Alternativ können diese Kammern jedoch auch durch außenliegende Druckaggregate bedarfsgesteuert mit wechselnden Drücken beaufschlagt sein.

Die radial innenliegenden Teilkammern 6.2 stehen über kanalartige Bohrungen 5 mit dem Innenraum 4 des Zentralrohres 1 hydraulisch in Verbindung, so daß also sowohl die Bohrungen 5 als auch die Teilkammern 6.2 ebenso wie der Innenraum 4 des Zentralrohres 1 mit dem zu bedämpfenden Fluid gefüllt sind.

Jede der Kammern 6 ist durch die Membran 7 in die Teilkammern 6.1 und 6.2 unterteilt. Dabei ist die Wanddicke der Membran 7 so gewählt, daß die Membran 7 in jeder der einzelnen Kammern 6 auch bei dem maximal zu erwartenden Arbeitsdruck in dem zu bedämpfenden Fluid absolut druckfest ist. Darüber hinaus ist die Dicke der Membran 7 nach Maßgabe der für die einzelnen Kammern benötigten Federkonstanten dimensioniert.

Der in der Fig. 1 dargestellte Membranschlauch 7 ist zudem nach sowohl radial innen als auch radial außen vorspringenden Ringstegen 10 versehen, die in entsprechende Ringnuten eingreifen, die sowohl in der Außenmantelfläche des Zentralrohres 1 als auch in der Innenmantelfläche des Außenrohres 8 korrespondierend ausgebildet sind. Auf diese Weise ist eine absolut hermetische fluidische Trennung der einzelnen Kammern 6 voneinander in sowohl axialer als auch radialer Richtung gewährleistet.

In weiterhin aus Fig. 1 ersichtlicher Weise sind sowohl das Zentralrohr 1 als auch das Außenrohr 8 mit einer solchen Wandstärke ausgebildet, daß die radial innenliegende Teilkammer 6.2 unmittelbar in der äußeren Manteloberfläche des Zentralrohres 1 und die radial außenliegenden Teilkammern 6.1 unmittelbar in der Innenmantelfläche des Außenrohres 8 ausgebildet sind. Diese Ausgestaltung des Dämpfers stellt eine besonders robuste und kostengünstige Konfiguration dar, ist jedoch nicht zwingend. Sowohl die Verbindungskanäle 5 als auch die Kammern 6 können aus separat gefertigten Bauteilen bestehen, die an ein Zentralrohr 1 angesetzt sind. Eine solche konstruktive Ausgestaltung mag beispielsweise zu Versuchszwecken durchaus sinnvoller sein als die in Fig. 1 dargestellte konstruktiv kompakte Auslegung des Pulsationsdämpfers.

Ebenso unterliegen die Anordnung, Verteilung und Dimensionierung der kanalartigen Bohrungen 5 primär den durch die Anwendung vorgegebenen Abstimmerfordernissen und unterliegen konstruktiven Beschränkungen erst in zweiter Linie. So können die kanalartigen Bohrungen oder Öffnungen 5 radial sowohl gleich verteilt als auch ungleich verteilt angeordnet sein, wie dies beispielsweise in der Fig. 1 dargestellt ist. So mag es bei einer bekannten und definierten Winkellage für den Einbau des Dämpfers durchaus sinnvoll sein, den Sohlenbereich des Innenraums 4 des Zentralrohres 1 von Bohrungen freizuhalten, um ggf. in dem zu bedämpfenden Fluid mitgeführte Feststoffpartikel bei einer Sedimentation nicht in die Kammern 6 gelangen zu lassen. Zudem können die kanalartigen Bohrungen 5 auch in axialer Richtung so angeordnet und verteilt sein, daß sich in die anzuschließenden Teilkammern 6.2 entweder, auf die axiale Richtung bezogen, jeweils nur eine Reihe von Kanälen oder zwei, drei oder mehrere Ringe oder in anderer Weise angeordnete Verteilungen von Kanälen öffnen. Lediglich die von jeder einzelnen Kammer 6 erwarteten Dämpfungskenndaten, den Grad der Ankopplung eingeschlossen, bestimmen die Verteilung, Konfiguration und Dimensionierung der kanalartigen Bohrungen zwischen dem Innenraum 4 des Zentralrohres 1 und den hydraulischen Teilkammern 6.2.

## Patentansprüche

1. Pulsationsdämpfer zum Dämpfen von Druckpulsationen in leitungsgeführten druckbeaufschlagten Flüssigkeiten, insbesondere zum Dämpfen von Pulsationen mit Frequenzen im hörbaren Frequenzbereich, mit einem vom Druckfluid durchströmten Zentralrohr (1) mit Anschlüssen (2, 3) zum Zwischenschalten des Pulsationsdämpfers in die zu bedämpfende Druckfluidleitung, senkrecht zur Zentralrohrachse ausgerichteten kanalartigen Öffnungen (5) und einer elastischen Membran (7), **dadurch gekennzeichnet, daß** radial außenliegende Kammern (6) gebildet sind, die mittels der kanalartigen Öffnungen (5) mit dem Innenraum (4) des Zentralrohres (1) hydraulisch verbunden sind, und daß die elastische Membran (7) in jeder dieser Kammern (6) jeweils einen mit einem pneumatischen Fluid gefüllten ersten Kammerabschnitt (6.1) von einem über die Öffnungen (5) flüssigkeitsgefüllten zweiten Kammerabschnitt (6.2) druckfest, aber durchlässig für Druckschwankungen, und hermetisch fluiddicht abgrenzt.

2. Pulsationsdämpfer nach Anspruch 1, **dadurch gekennzeichnet, daß** die kanalartigen Öffnungen (5) und die Kammerabschnitte (6.2) für das hydraulische Fluid im Mantel des Zentralrohres (1) ausgebildet sind.

3. Pulsationsdämpfer nach einem der Ansprüche 1 oder 2,
**gekennzeichnet durch**
ein Aussenrohr (8), das das Zentralrohr (1) radial aussenliegend hülsenartig umschliesst, wobei die äussere Mantelfläche des Zentralrohres (1) und die innere Mantelfläche des Aussenrohres (8) formkomplementär zueinander sind und in der inneren Mantelfläche des Aussenrohres (8) die Kammerabschnitte (6.1) für das pneumatische Fluid ausgebildet sind.

4. Pulsationsdämpfer nach Anspruch 3,
**gekennzeichnet durch**
eine Ausbildung des Aussenrohres (8) in zwei oder mehreren Schalen (8.1,8.2).

5. Pulsationsdämpfer nach einem der Ansprüche 2 bis 4,
**gekennzeichnet durch**
eine Ausbildung der elastischen Kammermembranen (7) als einteiliger Elastomerschlauch, der den Mantel des Zentralrohres (1) radial aussen auf dessen gesamter axialen Länge umschliesst.

6. Pulsationsdämpfer nach Anspruch 5,
**gekennzeichnet durch**
sowohl nach radial aussen als auch nach radial innen vorspringende und einteilig mit dem Membranelastomerschlauch (7) ausgebildete Dichtringrippen (10) zu einer auch in axialer Richtung hermetischen fluidischen Trennung der Kammern (6) gegeneinander.

7. Pulsationsdämpfer nach einem der Ansprüche 1 bis 6,
**gekennzeichnet durch**
eine axiale Folge von Kammern (6) mit jeweils von Kammer zu Kammer zunehmendem oder abnehmendem Kammervolumen.

8. Pulsationsdämpfer nach einem der Ansprüche 1 bis 7,
**gekennzeichnet durch**
zumindest grössenordnungsmässig gleiche Volumina der beiden jeweils eine Kammer (6) bildenden Teilkammern (6.1, 6.2).

9. Verwendung eines Pulsationsdämpfers mit den Merkmalen eines der Ansprüche 1 bis 8 zum Bedämpfen hydraulischer Servoleitungen, insbesondere im Kraftfahrzeugbau.

10. Verwendung eines Pulsationsdämpfers mit den Merkmalen eines der Ansprüche 1 bis 8 zum Bedämpfen der Servoleitungen für das Lenksystem von Kraftfahrzeugen.

## Claims

1. A pulsation damper for damping pressure pulsations in liquids subjected to pressure in pipelines, more particularly for damping pulsations with frequencies in the audio frequency range, comprising a central tube (1) through which pressure fluid flows and which has connections (2, 3) for interconnecting the pulsation damper in the pressure fluid line for damping, openings (5) in the form of ducts aligned perpendicularly to the central tube axis, and an elastic membrane (7), **characterised in that** radially outwardly situated chambers (6) are formed which are hydraulically connected to the interior (4) of the central tube (1) by means of the duct-like openings (5), and **in that** the elastic membrane (7) in each of said chambers (6) respectively divides a first chamber portion (6.1) filled with a pneumatic fluid from a second chamber portion (6.2) which is filled with liquid via the openings (5), the division being pressure-proof but permeable to pressure fluctuations and hermetically fluid-tight.

2. A pulsation damper according to claim 1, **characterised in that** the duct-like openings (5) and the chamber portions (6.2) for the hydraulic fluid are formed in the surface of the central tube (1).

3. A pulsation damper according to claim 1 or 2, **characterised by** an outer tube (8) which, radially outwardly situated, encloses the central tube (1) after the style of a sleeve, the outer surface of the central tube (1) and the inner surface of the outer tube (8) being of complementary shape and the chamber portions (6.1) for the pneumatic fluid being formed in the inner surface of the outer tube (8).

4. A pulsation damper according to claim 3, **characterised by** forming the outer tube (8) in two or more shells (8.1, 8.2).

5. A pulsation damper according to any one of claims 2 to 4, **characterised by** a construction of the elastic chamber membranes (7) in the form of a one-piece elastomer tube which encloses the surface of the central tube (1) radially externally over its entire axial length.

6. A pulsation damper according to claim 5, **characterised by** sealing ring ribs (10) which project both radially outwards and radially inwards and are made in one piece with the membrane elastomer tube (7), for hermetic fluidic separation of the chambers (6) from one another in the axial direction as well.

7. A pulsation damper according to any one of claims 1 to 6, **characterised by** an axial sequence of chambers (6) with the chamber volume increasing or decreasing respectively from one chamber to another.

8. A pulsation damper according to any one of claims 1 to 7, **characterised by** the volumes of the two sub-chambers (6.1, 6.2) respectively forming a chamber (6) being at least of the same orders as magnitude.

9. Use of a pulsation damper having the features of any one of claims 1 to 8 for damping hydraulic servo-lines, particularly in automotive engineering.

10. Use of a pulsation damper having the features of any one of claims 1 to 8 for damping the servo-lines for the steering system of motor vehicles.

## Revendications

1. Amortisseur d'impulsions pour amortir les impulsions de pression dans des liquides circulant sous pression dans une conduite et, en particulier pour amortir les impulsions ayant des fréquences situées dans le domaine des fréquences audibles, comprenant un tube central (1) dans lequel circule un fluide sous pression, avec des raccords (2, 3) pour intercaler l'amortisseur d'impulsions sur la conduite à fluide sous pression à amortir, des ouvertures (5) constituant des canaux, agencées perpendiculairement à l'axe central et une membrane élastique (7), **caractérisé en ce que** des chambres (6) sont aménagées radialement à l'extérieur, qui sont en communication hydraulique par l'intermédiaire des ouvertures (5) constituant des canaux avec le compartiment interne (4) du tube central (1) et **en ce que** la membrane élastique (7) dans chacune de ces chambres (6) sépare, de manière étanche à la pression, mais perméable aux oscillations de pression, une première portion (6.1) de chambre remplie d'un fluide pneumatique, d'une seconde portion (6.2) de chambre remplie de liquide, via les ouvertures (5).

2. Amortisseur d'impulsions selon la revendication 1, **caractérisé en ce que** les ouvertures (5) constituant des canaux et les portions (6.2) des chambres recevant le fluide hydraulique, sont réalisées dans la paroi du tube central (1).

3. Amortisseur d'impulsions selon la revendication 1 ou la revendication 2, **caractérisé en ce qu'**un tube externe (8), disposé radialement à l'extérieur du tube central (1) enveloppe celui-ci à la manière d'une coque, **en ce que** la surface externe de la paroi du tube central (1) et la surface interne de la paroi du tube externe (8) ont des formes mutuellement complémentaires et **en ce que** les portions (6.1) des chambres destinées au fluide pneumatique sont formées dans la surface interne de la paroi du tube externe (8).

4. Amortisseur de pulsions selon la revendication 3, **caractérisé en ce que** le tube externe (8) est constitué de deux coques (8.1, 8.2), ou davantage.

5. Amortisseur d'impulsions selon l'une des revendications 2 à 4, **caractérisé en ce que** la structure de membrane élastique (7) des chambres est réalisée sous la forme d'un tube d'une pièce en un élastomère, qui recouvre radialement à l'extérieur le tube central (1) sur toute sa longueur axiale.

6. Amortisseur d'impulsions selon la revendication 5, **caractérisé par** des nervures d'étanchéité annulaires (10) formées d'une pièce avec le tube en élastomère constituant la membrane (7) et faisant saillie radialement, aussi bien vers l'extérieur que vers l'intérieur, pour assurer une séparation étanche aux fluides entre les chambres (6), également dans la direction axiale.

7. Amortisseur d'impulsions selon l'une des revendications 1 à 6, **caractérisé par** une succession axiale de chambres (6) avec, chaque fois, une augmentation ou une diminution du volume de la chambre, d'une chambre à la suivante.

8. Amortisseur d'impulsions selon l'une des revendications 1 à 7, **caractérisé en ce que** les portions (6.1, 6.2) de chambre constituant une chambre (6) ont des volumes qui sont au moins du même ordre de grandeur.

9. Utilisation d'un amortisseur d'impulsions avec les caractéristiques de l'une des revendications 1 à 8 pour l'amortissement de conduites de commande hydraulique, en particulier dans la construction automobile.

10. Utilisation d'un amortisseur d'impulsions avec les caractéristiques de l'une des revendications 1 à 8 pour l'amortissement de conduites de commande du système de direction dans les automobiles.
